# EUROPEAN PATENT SPECIFICATION

(11) **EP 1 262 406 B1**
(45) Date of publication and mention of the grant of the patent: **26.07.2006**
(21) Application number: 02011437.7
(22) Date of filing: 24.05.2002
(51) Int. Cl.: B65B 7/14, B65B 51/14, B29C 57/10

(54) **Pliers device for closing and moulding bottom portion of containers**
Klemmvorrichtung zum Verschliessen und Prägen von Behälterböden
Dispositif de pinces pour la fermeture et le moulage du fond de récipients

(30) Priority: 25.05.2001 IT BO20010333
(43) Date of publication of application: 04.12.2002
(73) Proprietor: T.M. di Tiziana Mazza, 40064 Ozzano Emilia (Bologna) (IT)
(72) Inventor: Barufatto, Roberto, 40068 San Lazzaro Di Savena (Bologna) (IT); Barufatto, Simone, 40068 San Lazzaro Di Savena (Bologna) (IT)
(74) Representative: Negrini, Elena

(56) References cited:
- EP-A- 0 468 940
- US-A- 2 608 333
- US-A- 2 926 474
- US-A- 3 063 890

## Description

The present invention relates to the packaging of products, particularly of pharmaceutical and cosmetic type. Particularly the invention refers to a pliers device for moulding containers, single or jointed to form sticks or strips, normally fit in a working carousels of a automatic packaging machine.

The known devices for closing and sealing containers, made of heat-weldable plastic material and having open bottom ends, in order to allow to fill said containers, are generally constituted by working carousels or rotating drums, with vertical axis, having support pliers, which block and move the containers, and heating and/or moulding pliers, which close and the seal said containers.

The support pliers are shaped according to the dimensions and the shape of the container or the container strip, and therefore have to be completely or partially replaced in case of size change over or when the new production batch requires a different container.

The container transport is carried out by closing the pliers in proximity of the container bottom, once that these latter have been filled with the product to be packaged, while the sealing is carried out by compressing, along a direction transversal to the longitudinal axis of the containers, the bottom of these latter between the heated surfaces of the jaws of the heating pliers.

Generally the known working carousels move with alternate motion and most of the operations on the containers are made during the stop phases of said motion. Particularly, the heating of the end portion of the containers is made during one single phase or during two or three following phases, according to the machine cycle, that means according the duration of said stop phase and the time needed to seal the container.

Thus the known machine include container support pliers coupled to the working carousel rotating in alternate and heating and moulding pliers, which are positioned outside the working carousel in fixed positions and which operate on the containers only in a rotation stop condition of said working carousel.

Document US-A-2608333 shows a pliers device for closing and moulding the bottom portions of containers made of heat-weldable plastic material and having a bottom open. Said device being coupled to a packaging machine and includes a support; inner pliers, whose jaws are connected to a couple of inner shafts rotatably supported by the support external pliers, whose jaws are connected to a couple of external shafts coaxial to the respective inner shafts and supported by the support, and shaped in such a way to internally include said inner pliers; an envelope seat, fit for housing at least a container and removably connected to the support.

The inner pliers being moved from a inner opening condition, in which each container is inserted into or disengaged from the envelope seat, to the closing condition, in which said inner pliers squeeze the bottom of each container; the external pliers being moved from an external opening condition, in which the jaws of the external pliers are not in contact with the container, to a moulding condition in which said external pliers are closed over the inner pliers so plastically moulding the bottom portion of each container.

Document US-A-2926474 discloses a machine to heat sealing portions of articles formed of thermoplastic material. The machine comprises jaws for squeezing an end of a tubular container and a heating plug for sealing such squeezed end.

The main drawback of the known pliers devices consists in that said devices mould the containers only in correspondence of the working carousel stop and by using pliers fixed to the working carousel, so increasing the overall dimension of this latter on a horizontal plan, subject to the laminar flow of the controlled atmosphere inside the packaging machine.

Another drawback consists in that such pliers device allow to carry out closed containers whose end portion is sealed and moulded only with a fin or winglet shape, with substantially flattened section having sharp and cutting edges and furthermore having an irregular and coarse shape, such to require a following and further finishing operation.

Further drawback consist in that the support pliers, being shaped according to the dimensions and the shape of the container, or the container strip, are subject to a complete or partial substitution in case of a size change over, that means they are subject to maintenance and adjustment procedures generally complex and laborious, which require skilled labour and involve machine stops.

Other drawback of the known pliers devices consists in their large overall dimensions due to the pliers externally positioned with respect to the working carousel and due to the position of the working carousel, which lies on a horizontal plan since its rotating axis is vertical. Such dimension, in the particular case of packaging machine for pharmaceutical use in antiseptic or sterile atmosphere, having protections or isolators and a laminar airflow, limits the accessibility to the inner parts of the machine, increasing the surface subject to laminar flow.

The main object of the present invention is to propose a pliers device for moving, closing and moulding the containers on a vertical plan, permitting to limit the overall dimensions, especially in width, of the machine, which include said device for a better inner accessibility by the operator and a small surface to expose to the laminar flow.

Further object is to propose a pliers device for moulding containers allowing to carry out a sealed end portion having a fin or winglet shape without sharp edges and such to constitute a support base for the steady vertical positioning of the container, single or in strip, or to carry out an abutment surface adequate to allow the transfer of the containers in single line.

Further object is to propose a pliers device having container supporting means, which are shaped according to the containers dimensions and shapes, but which allow quick and simple size change over procedures not requiring skilled labour and long machine stops.

The above-mentioned objects are achieved according to the features of the pliers device according to claim 1.

The characteristics of the present invention are underlined in the following with particular reference to the attached drawings, in which:
- figure 1 shows a schematic front view of a working carousel in which there are a plurality of pliers devices object of the present invention;
- figure 2 shows a section view according to the plain II-II of figure 1;
- figure 3 shows a partial section enlarged view of the pliers device of figure 2;
- figure 4A shows a front view of the pliers device object of the present invention;
- figure 4B shows an axonometric partial section view of the heads of the pliers device of figure 4A, in which some parts have been removed for better show others;
- figures 4C and 4D show respectively a top view and partial axonometric view of the inner pliers closed;
- figures 4E and 4F show respectively a top view of a variant of close inner pliers and a partial axonometric view of inner and external pliers, in which some parts have been removed for better underlining others;
- figure 5 shows a top section view of the pliers device of figure 2, in which some parts have been removed for better underlining others;
- figure 6 shows an enlarged partial top view of the pliers device of figure 3;
- figures 7A and 7B show front enlarged views respectively of upsetting means of the pliers device of figure 4A and a variant of said means.

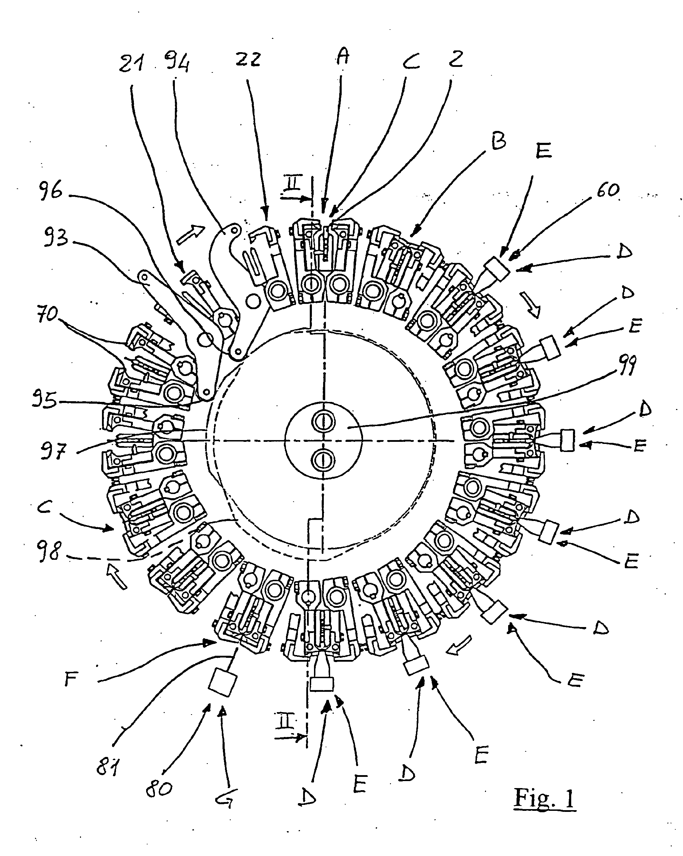

With reference to figures 1- 6, numeral 1 indicates the pliers device for moulding the bottom portion 4 of containers 2 fit in an automatic packaging machine. Said packaging machine includes an inserting station into the device 1 of each container 2, filled of product and with the bottom 3 open, and a removal station from the device 1 of the container 2 closed, moulded and sealed.

In the preferred embodiment the device 1 is essentially constituted by inner pliers 21, external pliers 22, melting means 60 and upsetting means 80. The preferred embodiment of the device provides the positioning of a plurality of said devices on a working carousel 10, rotatably supported by the packaging machine and shown in figure 1.

The inner pliers 21 have a couple of jaws, an end of which is rotatably coupled to the first end of an inner shaft 24, rotatably supported by a support 23, fixed to the working carousel 10. The external pliers 22 have a couple of jaws, each one coupled to the first end of an external shaft 25, coaxial to the respective inner shaft 24 and rotatably supported by the support 23. The external pliers 22 are shaped in such a way to internally include the inner pliers 21.

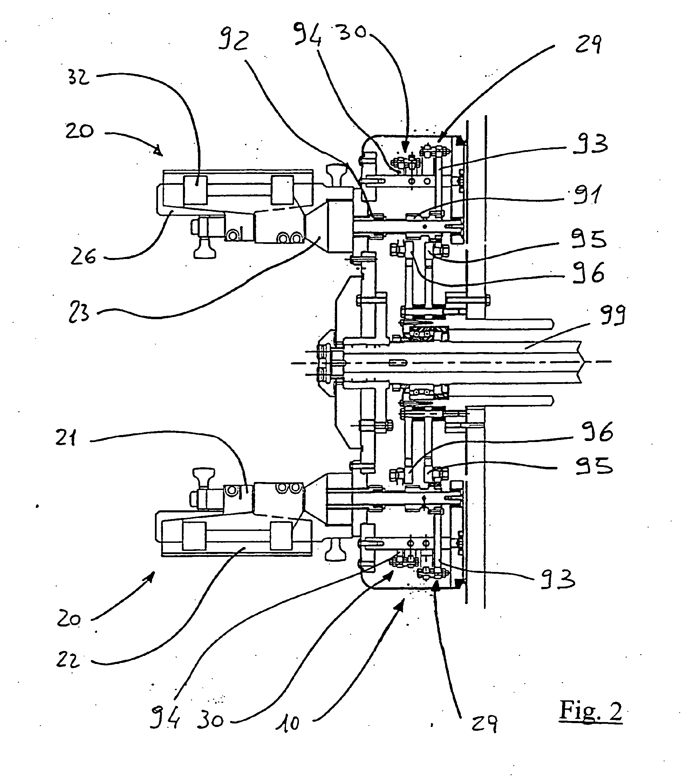

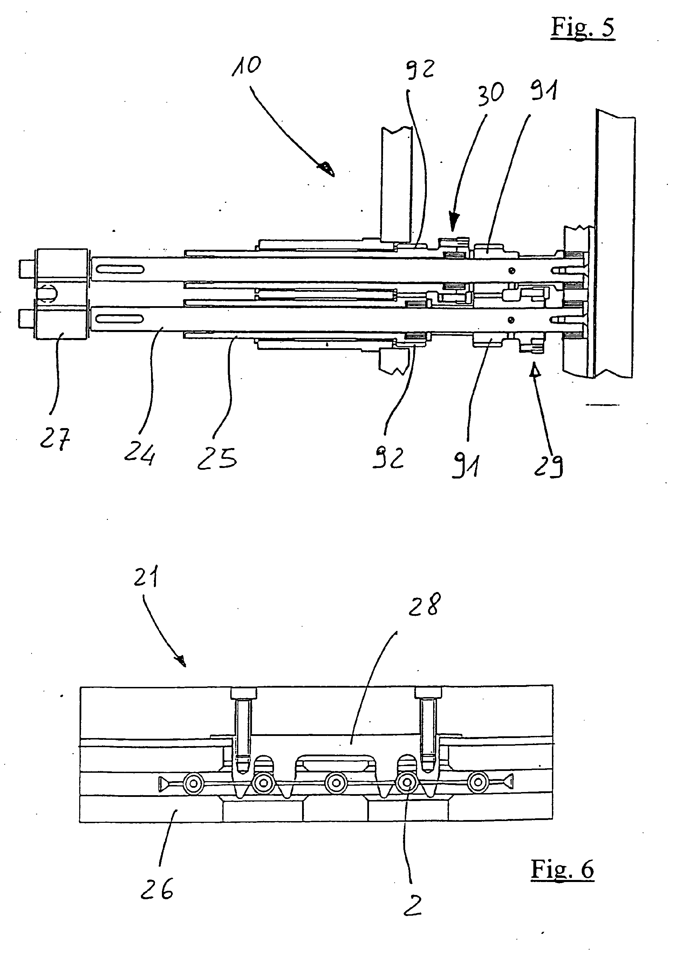

With particular reference to figures 2 and 5, the two inner shafts 24 are kinematically connected through first toothed means 91, particularly two gear wheels. Similarly the two external shafts 24 are kinematically connected through second toothed means 92, for instance two gear wheels.

First moving means 29 are fixed in correspondence of the second end of one of the two inner shafts 24, said first moving means 29 being constituted by an inner lever 93 an end of which has first follower cam means 95, for instance an idle roller fit for following an inner cam 97, fixed to the working carousel 10 in position almost concentric and whose profile is included between the rotating horizontal axis 99 of the working carousel 10 and the pliers inner 21 and external 22. Second moving means 30 are fixed in correspondence of the second end of one of the two external shafts 25 and include an external lever 94 an end of which has second follower cam means 96, for instance an idle roller fit for following an external cam 98, fixed to the working carousel 10 in position almost concentric and with the profile included between its horizontal axis 99 and the pliers inner 21 and external 22.

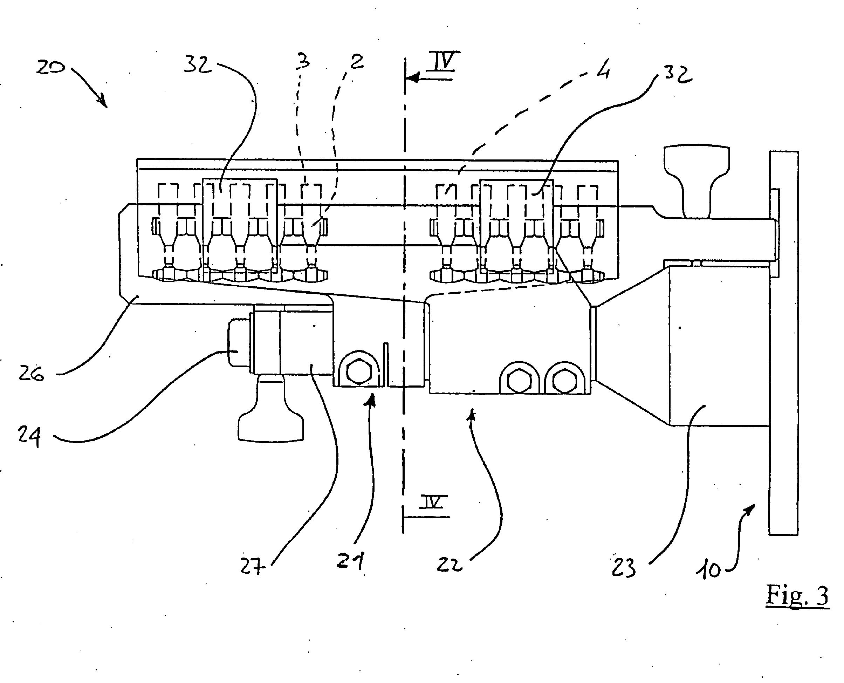

With particular reference to figures 3, 4A and 6, the device 1 further include both an envelope seat 26, removably connected to the support 23 and fit for housing the containers 2, and a connection mean 27, which connects the free ends of the couple of inner shafts 24 and removably supports the envelope seat 26 and centering mean 28, removably connected to a jaw of the inner pliers 21 and fit to correctly position each container 2 inside the envelope seat 26.

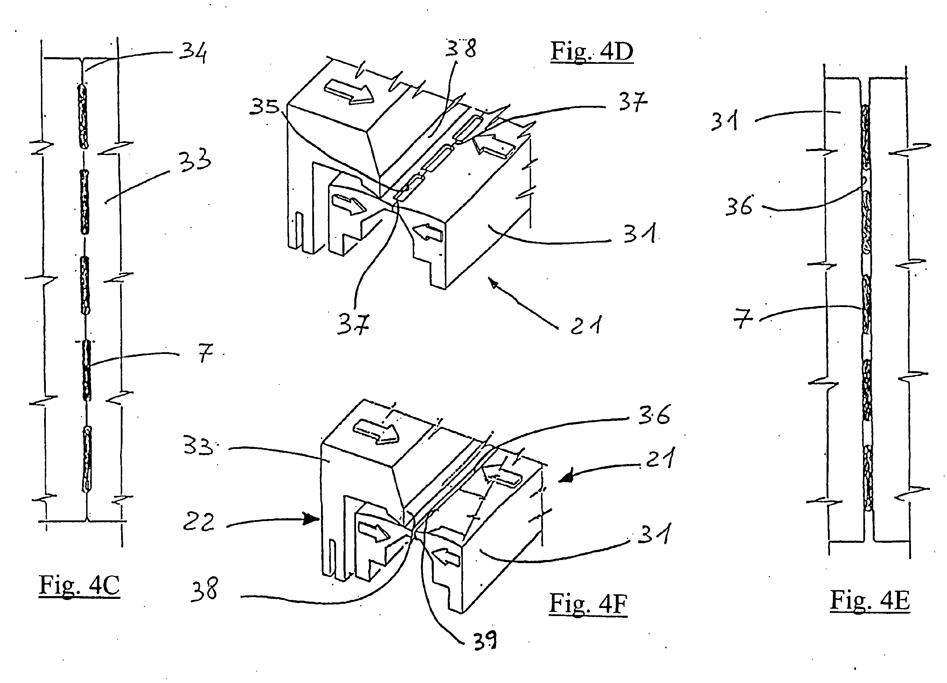

With particular reference to figures 4A - 4D, each jaw of the inner pliers 21 has at the free end a inner end portion 31, provided with a plurality of notches 35 fit for housing the bottom 3 of the container 2, in order to mould the portion thereof which is melt. Particularly in figure 4D, between each hollow 35 there is a protrusion 37, which matches a corresponding protrusion, manufactured on the other jaw of the inner pliers 21, in order to carry out a dividing wall between the bottoms 3 of the containers 2.

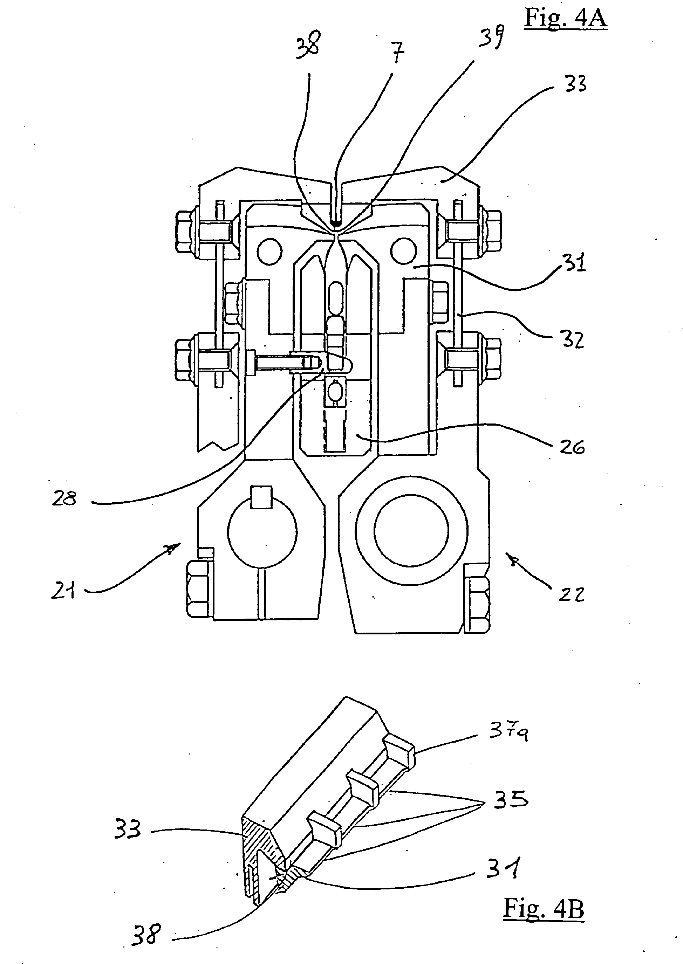

In the variant of figure 4B, the protrusion 37 is prominent shaped and carries out a tine 37a, which extends from each related notch 35 in such a way to eventually enclose melted material of the bottom portion 4 of each container 2. At the free end of each jaw of the external pliers 22 it is fixed, through elastic connecting means 32, an external end portion 33 having such a profile to mould the end portion 4 of each container 2 with a almost flat fin shape, having an shaped end bead 7 with an almost triangular or rectangular section with transversal extension or with an almost circular or extended rectangular section. Each external end portion 33 has a flat abutment 38 such to be opposed, without interference, to the abutment of the facing jaw of the same external pliers 22, in correspondence of his closing.

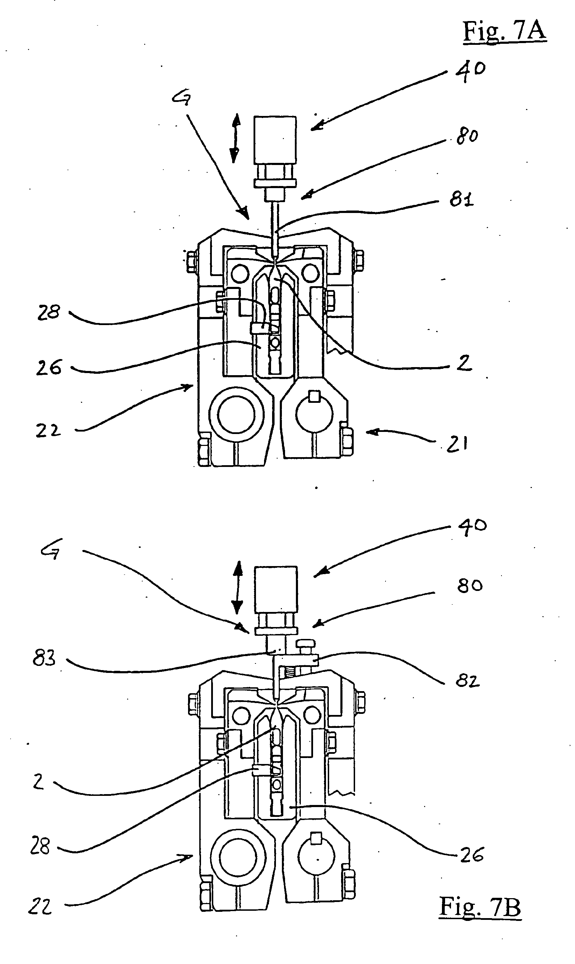

With reference to figures 1 and 7A, the device 1 further include melting means 60 fit for melting the bottom portion 4 of each container 2 and essentially constituted by a heated body at around 200-250°C.

With reference to figures 7A and 7B, the device 1 further includes at least upsetting means 80 fit to plastically mould the melted bottom portion 4 of each container 2, by compressing said portion according to a direction almost parallel to the longitudinal axis of the container 2.

In the preferred embodiment of the device 1, the upsetting means 80 include an external punch 81 fit to be inserted between the closed jaws of the external pliers 22, in correspondence of a upsetting condition G, in order to mould the melted bottom portion 4 of the container 2. The melting means 60 and the upsetting means 80 can be moved in direction almost parallel to the longitudinal axis of the container 2.

The operation of the device object of the present invention provides at first the opening of the inner pliers 21, in correspondence of the inner opening condition A, and the opening of the external pliers in the external opening condition C thereof. Rotating related shafts, inner 24 and external 25 makes such opening. Each container 2, preferably filled and with the bottom 3 open, is therefore inserted into the envelope seat 26. Then the external pliers 22 remain open, while the inner pliers 21 are closed, by moving the couple of inner shafts 24.

If the device 1 is coupled to the working carousel 10, the closing of the inner pliers 21 is made, for instance, by the rotation of the inner lever 93, operated by the related cam follower roller 95 which is fit to follow the inner cam 97, from the inner opening condition A to a closing condition B, in which the inner pliers 21 squeeze the bottom 3 of each container 2, carrying out the bottom portion 4, in proximity of the free end. The jaws of the inner pliers 21 are reciprocally rotated by rotating the inner shafts 24, which are connected through the mesh between the related first gear wheels 91 of the first moving means 29. Then the melting means 60 are moved in direction of the containers 2, in correspondence of a heating condition E thereof, in such way to contact and to squeeze the bottom portion 4 of the containers 2 of a stick, so that to melt and progressively mould a flat bottom. Once melted the bottom portion 4 of each container 2, for instance through repeated contact cycles of the melting means 60, said bottom portion remains molded as a "foot without sharp edges" by virtue also of the "mold" constituted by the two notches 35 of the facing jaw couple of the inner pliers 21, and by the related protrusions 37 or tines 37a. Finally the opening of the inner pliers 21 allows the removal of the containers 2 from the seat 26.

As shown in figure 4A, before opening the inner pliers 21, the external pliers 22 is closed by moving the couple of external shafts 25, connected and rotated by the second moving means 30, from the external opening condition C, in which the jaws of the external pliers 22 are not in contact with the containers 2 of the strip, to the moulding condition F, in which the external pliers 22 close around the inner pliers 21, so that the abutments 38 of the external end portions 33 of the two facing jaws of the external pliers 22, reciprocally face, leaving a slot 39, in order to plastically molding the bottom portion 4 of each container 2. Therefore if the device 1 is assembled on the working carousel 10, the passage of the external pliers 22 from the external opening condition C to the squeezing condition D, and thus to the external pliers closing condition, is operated by the rotation of the external lever 94, because the sliding of the cam follower roller 96 along the external cam 98 and because the consequent rotation of an external shaft 25, to which said external lever is connected, and the rotation of the remaining external shaft 25, thanks to the mesh of the second gear wheels 92, keyed to the related external shafts 25.

A further variant of the device 1 provides that the external punch 81 of the upsetting means 80 penetrate between the external end portions 33 of the jaws of the external pliers 22 up to compress the bottom portion 4 of the strip containers inserted in the seat 26. This bottom portion 4 is moulded as flat foot since the thermo melted plastic is compressed and moulded in the "mould" carried out by the notch 35 and the protrusions 37 or the tines 37a of each jaw of the inner pliers 21, by the flat abutment 38 of the external end portions 33 of the jaws of the external pliers 22 and by the external punch 81 inserted between said pliers. The opening of the pliers, external 22 and inner 21, for instance when the device is assembled to the working carousel 10, is made by rotating the related levers, respectively external 94 and inner 93, forced to follow the profile of the cams respectively, external 98 and inner 97.

A further variant of the device 1, shown in figure 7B, provides that upsetting means 80 include a pliers punch 82, elastically connected to a jaw of the external pliers 22, in such a way that the punch 82 remains spaced apart from the bottom portion 4 of each container 2. A percussion mean 83 is moved in such a way to push the punch 82 between the jaws of the external pliers 22, in correspondence of the upsetting condition G, in order to mould the melted bottom portion 4 of the container 2.

In figures 4E and 4F it is shown a variant of the two jaw heads of the inner pliers 21, in which the notches 35 and the protrusions 37 are absent, but there is, for each jaw, a flat wall 36 fit for compressing the melted bottom portion 4 of the container 2, without contacting the opposed facing flat wall. The manufacturing of the pliers, inner 21 and external 22, having corresponding coaxial shafts, reduces the overall dimension of the device.

The main advantage of the present invention is to provide a pliers device that allows moving, closing and moulding the containers on a vertical plan, permitting to limit the overall dimensions, especially in width, of the machine including said device, in order to achieve a better inner accessibility by the operator and a small surface to expose to the laminar flow.

Another advantage is to provide a pliers device for moulding containers which allows carrying out an sealed end portion having a fin or winglet shape, without sharp edges and such to constitute a support base for the steady vertical positioning of the container, single or associated in strip, or an abutment surface adequate to allow the transfer of the containers in single line.

Further advantage is to provide a pliers device having container supporting means which are shaped according to the container dimensions and shapes, but which allow quick and simple size change over procedures not requiring skilled labour and long machine stops.

## Claims

1. Pliers device for moulding containers (2), made of heat-weldable plastic material and having a bottom (3) open, said device (1) being coupled to a packaging machine said device (1) includes:
- a support (23);
- inner pliers (21), whose jaws are connected to a couple of inner shafts (24) rotatably supported by the support (23);
- external pliers (22), whose jaws are connected to a couple of external shafts (25), coaxial to the respective inner shafts (24) and supported by the support (23), and shaped in such a way to internally include said pliers inner pliers (21);
- an envelope seat (26) fit for housing at least a container (2) and removably connected to the support (23);
said device (2) being **characterized in that** further includes melting means (60) having an alternative motion in direction of the longitudinal axis of the containers (2);
the inner pliers (21) being moved by rotating the couple of inner shafts (24) from a inner opening condition (A), in which each container (2) is inserted into or disengaged from the envelope seat (26), to the closing condition (B), in which said inner pliers (21) squeeze the bottom (3) of each container (2); in correspondence of heating condition (E), said melting means (60), contact and squeeze the related closed bottom portions (4) that are progressively melted by them for carrying out a shaped end bead (7) by means of the external pliers (22), moved by rotating the couple of external shaft (25) from an external opening condition (C), in which the jaws of the external pliers (22) are not in contact with the container (2), to a moulding condition (F), in which said external pliers (22) are closed over the inner pliers (21), so plastically moulding the melted bottom portion (4) of each container (2).

2. Device according to claim 1 **characterized in that** the free end of each jaw of the inner pliers (21) is removably fixed to an inner end portion (31).

3. Device according to claim 2 **characterized in that** the free end of the inner end portion (31) has a plurality of notches (35) ending with at least a protrusion (37) fit for housing the bottom (3) of the container (2) and for moulding said bottom in correspondence of the closing condition (B).

4. Device according to claim 3 **characterized in that** the protrusion (37) is coplanar with the related notches (35) or extends like a tine (37a) from these latter towards the external pliers (22).

5. Device according to claim 2 **characterized in that** the free ends of the inner end portions (31) of the inner pliers (21) have walls (36), reciprocally facing and carrying out a slot (39), in correspondence of the closing condition (B).

6. Device according to claim 1 **characterized in that** an external end portion (33) is removably fixed to the free end of each jaw of the external pliers (22), through elastic connection means (32).

7. Device according to claim 6 **characterized in that** the external end portion (33) is shaped for molding the bottom portion (4) of each container (2) with an almost flat fin shape and a shaped end bead (7), with a nearly triangular or rectangular section with transversal extension or almost circular or rectangular elongated section.

8. Device according to claim 1 **characterized in that** the two inner shafts (24) of the inner pliers (21) are kinematically connected by means of first toothed means (91).

9. Device according to claim 8 **characterized in that** further include first moving means (29) including at least an inner lever (93), fixed to at least an inner shaft (24) of each inner pliers (21) and rotatably supporting first cam follower means (95) fit for following an inner cam (97) of the working carousel (10).

10. Device according to claim 1 **characterized in that** the two external shaft (25) of the external pliers (22) are kinematically connected by means of second toothed means (92).

11. Device according to claim 10 **characterized in that** includes second moving means (30) including at least an external lever (94), fixed to at least an external shaft (25) of the external pliers (22) and rotatably supporting second cam follower means (96), fit for following an external cam (98) of the working carousel (10).

12. Device according to claim 1 **characterized in that** further includes a centering mean (28), removably connected to a jaw of the inner pliers (21), fit for correctly positioning each container (2) inside the envelope seat (26).

13. Device according to claim 1 **characterized in that** further includes a support mean (27), which connects the free ends of the couple of inner shafts (24) and removably supports the envelope seat (26).

14. Device according to claim 1 **characterized in that** includes upsetting means (80) provided with an external punch (81) which can be fit between the external pliers (22) closed in correspondence their moulding condition (F), for compressing the melted bottom portion (4) of each container (2) in correspondence of an upsetting condition (G), in order to mould a shaped bead (7).

15. Device according to claim 1 **characterized in that** includes upsetting means (80) having at least a pliers punch (82), fixed to at least a jaw of the external pliers (22) and moved by a percussion mean (83) in correspondence of an upsetting condition (G), in which said pliers punch (82) is fit between the jaws of the external pliers (22) closed in order to compress the melted bottom portion (4) of each container (2).

## Patentansprüche

1. Klemmvorrichtung für das Prägen von Behältern (2), die aus warm verschweißbaren Kunststoffmaterial bestehen und die einen offenen Boden (3) aufweisen, wobei die besagte Vorrichtung (1) mit einer Verpackungsmaschine verbunden ist; wobei die besagte Vorrichtung (1) umfaßt:
- einen Support (23);
- innere Zangen (21), deren Klauen mit einem Paar innerer Wellen (24) verbunden sind, die drehbar durch den Support (23) gestützt werden;
- äußere Zangen (22), deren Klauen mit einem Paar äußerer Wellen(25) verbunden sind, die koaxial zu den zugeordneten inneren Wellen (24) angeordnet sind und die durch den Support (23) gestützt werden und die derart ausgebildet sind, daß sie die besagten inneren Zangen der Zangen (21) in ihrem Inneren mit einschließen;
- eine Aufnahme (26), die für die Aufnahme wenigstens eines Behälters (2) ausgebildet und die lösbar mit dem Support (23) verbunden ist;
wobei die besagte Vorrichtung **dadurch gekennzeichnet ist, daß** sie weiterhin Schmelzmittel (60) umfaßt, die eine alternierende Bewegung in Richtung der Längsachse der Behälter (2) ausführen können;
wobei die inneren Zangen (21) **dadurch** bewegt werden, daß das Paar der inneren Wellen (24) von einem inneren Öffnungszustand (A), in dem jeder Behälter (2) in die Aufnahme (26) eingesetzt ist oder von dieser gelöst wird, in die Schließposition (B) gedreht wird, in dem die besagten innere Zangen (21) den Boden (3) jedes Behälters (2) zusammendrücken; und
wobei in Korrelation mit dem Aufheizzustand (E) die besagten Schmelzmittel (60) die zugeordneten geschlossenen Bodenteile (4) kontaktieren und zusammendrücken, die zunehmend durch diese aufgeschmolzen werden, um mittels der äußeren Zangen (22), die **dadurch** bewegt werden, daß das Paar der äußeren Wellen (25) von einem äußeren geöffneten Zustand (C), in dem die Klauen der äußeren Zangen (12) nicht in Verbindung mit dem Behälter (2) stehen, in einen Prägungszustand (F) gedreht werden, in dem die besagten äußeren Zangen (22) über den inneren Zangen (21) geschlossen sind, um so den geschmolzenen Boden (4) jedes Behälters (2) plastisch umzuformen und einen geformten Endwulst (7) zu bilden,.

2. Vorrichtung gemäß Anspruch 1, **dadurch gekennzeichnet, daß** das freie Ende jeder Klaue der inneren Zangen (21) lösbar an einem inneren Endbereich (31) befestigt ist.

3. Vorrichtung gemäß Anspruch 2, **dadurch gekennzeichnet, daß** das freie Ende des inneren Endbereiches (31) eine Anzahl von Kerben (35) aufweist, die mit wenigstens einer Vorwölbung (37) versehen sind, die für die Aufnahme des Bodens (3) des Behälters (2) und für das Prägen des besagten Bodens in Korrelation mit dem geschlossenen Zustand (B) ausgebildet sind.

4. Vorrichtung gemäß Anspruch 2, **dadurch gekennzeichnet, daß** die Vorwölbung (37) koplanar mit den in Verbindung stehenden Kerben (35) angeordnet ist oder sich wie eine Zinke (37a) von diesen letzteren in Richtung auf die äußeren Zangen (22) erstreckt.

5. Vorrichtung gemäß Anspruch 2, **dadurch gekennzeichnet, daß** die freien Enden der inneren Endbereiche (31) der inneren Zangen (21) Wände (6) aufweisen, die sich gegenseitig gegenüber liegen und die in Korrelation mit der geschlossenen Position (B) einen Schlitz (39) bilden.

6. Vorrichtung gemäß Anspruch 1, **dadurch gekennzeichnet, daß** ein äußerer Endbereich (33) über elastische Verbindungsmittel (32) lösbar am freien Ende jeder der Klauen der äußeren Zangen (22) befestigt ist.

7. Vorrichtung gemäß Anspruch 6, **dadurch gekennzeichnet, daß** der äußere Endbereich (33) derart ausgebildet ist, daß er für die Gestaltung des Bodens (4) jedes Behälters (2) mit einer mehr oder weniger flachen Flossenform und einem geformten Endwulst (7) mit einem angenähert dreieckigen oder rechteckigen Bereich mit transversaler Erstreckung oder angenähert kreisförmigem oder rechteckigem länglichem Bereich geeignet ist.

8. Vorrichtung gemäß Anspruch 1, **dadurch gekennzeichnet, daß** die zwei inneren Wellen (24) der inneren Zangen (21) über erste gezahnte Elemente (91) kinematisch verbunden sind.

9. Vorrichtung gemäß Anspruch 8, **dadurch gekennzeichnet, daß** sie weiterhin erste Antriebselemente (29) aufweist, die wenigstens einen inneren Hebel (93) aufweisen, der an wenigstens einer inneren Welle (24) jeder der inneren Zangen(21) befestigt ist und der drehbar erste Nocken-Folgeelemente (95) zum Abtasten eines inneren Nockens (97) des Arbeitskarussells (10) stützt.

10. Vorrichtung gemäß Anspruch 1, **dadurch gekennzeichnet, daß** die zwei äußeren Wellen (25) der äußeren Zangen (22) kinematisch mittels zweiter gezahnter Elemente (92) angeschlossen sind.

11. Vorrichtung gemäß Anspruch 10, **dadurch gekennzeichnet, daß** sie zweite Antriebselemente (30) aufweist, die wenigstens einen äußeren Hebel (94) aufweisen, der an wenigstens einer äußeren Welle (25) der äußeren Zangen (22) befestigt ist und der drehbar zweite Nocken-Folgeelemente (96) zum Abtasten eines äußeren Nockens (98) des Arbeitskarussells (10) stützt.

12. Vorrichtung gemäß Anspruch 1, **dadurch gekennzeichnet, daß** sie weiterhin ein Zentrierelement (28) umfaßt, das lösbar mit einer der Klauen der inneren Zangen (21) verbunden ist und das geeignet ist, jeden Behälter (2) richtig im Inneren der Aufnahme (26) in Position zu bringen.

13. Vorrichtung gemäß Anspruch 1, **dadurch gekennzeichnet, daß** sie weiterhin ein Stützelement (27) umfaßt, das die freien Enden der Paare der inneren Wellen (24) verbindet und das lösbar die Aufnahme (26) stützt.

14. Vorrichtung gemäß Anspruch 1, **dadurch gekennzeichnet, daß** sie Stauchmittel (80) umfaßt, die mit einem äußeren Stempel (81) versehen sind, der zwischen die äußeren Zangen (22) in enger Korrelation mit ihrer Formgebungsposition (F) eingepaßt werden kann, um den geschmolzenen Bodenbereich (4) jedes Behälters (2) in Korrelation mit einer gestauchten Position (G) zusammenzudrücken und um so einen geformten Wulst (7) zu bilden.

15. Vorrichtung gemäß Anspruch 1, **dadurch gekennzeichnet, daß** sie Stauchmittel (80) umfaßt, die wenigstens einen Zangenstempel (82) aufweisen, der an wenigstens einer der Klauen der äußeren Zangen befestigt (22) ist und der durch ein Schlagelement (83) in Korrelation mit einer gestauchten Position (G) bewegt wird, wobei der besagte Zangenstempel (82) zwischen die Klauen der äußeren Zangen (22) eingepaßt ist, um den geschmolzenen Boden (4) jedes Behälters (2) zusammenzudrücken.

## Revendications

1. Dispositif à pinces pour mouler des récipients (2), constitués d'un matériau plastique soudable à chaud et ayant un fond ouvert (3), ledit dispositif (1) étant couplé à une machine d'emballage, ledit dispositif (1) comprenant :
un support (23) ;
des pinces intérieures (21), dont les mâchoires sont reliées à un couple d'arbres intérieurs (24) qui sont supportés par le support (23) de manière rotative ;
des pinces extérieures (22), dont les mâchoires sont reliées à un couple d'arbres extérieurs (25) qui sont coaxiaux aux arbres intérieures respectifs (24) et supportés par le support (23), et formés de façon à inclure intérieurement les dites pinces intérieures (21);
un siège d'enveloppe (26) agencé pour loger au moins un récipient (2) et relié de manière amovible au support (23);
ledit dispositif (1) étant **caractérisé en ce qu'**il comprend en outre des moyens de fusion (60) effectuant un mouvement alternatif en direction de l'axe longitudinal des récipients (2) ;
les pinces intérieures (21) se déplaçant lorsqu'on fait tourner le couple d'arbres intérieurs (24) entre un état d'ouverture intérieure (A) dans lequel chaque récipient (2) est inséré dans ou désengagé du siège d'enveloppe (26) et un état de fermeture (B) dans lequel lesdites pinces intérieures (21) serrent le fond (3) de chaque récipient (2) ; en correspondance avec l'état de chauffage (E), lesdits moyens de fusion (60) entrent en contact et serrent les parties de fond fermées correspondantes (4) qui sont progressivement fondues par ceux-ci pour former une nervure d'extrémité formée (7) au moyen des pinces extérieures (22), qui se déplacent lorsqu'on fait tourner le couple d'arbres extérieurs (25) entre un état d'ouverture extérieure (C) dans lequel les mâchoires des pinces extérieures (22) ne sont pas en contact avec le récipient (2) et un état de moulage (F) dans lequel lesdites pinces extérieures (22) sont fermées sur les pinces intérieures (21) pour mouler plastiquement la partie de fond fondue (4) de chaque récipient (2).

2. Dispositif selon la revendication 1, **caractérisé en ce que** l'extrémité libre de chaque mâchoire des pinces intérieures (21) est fixée de manière amovible à une partie d'extrémité intérieure (31).

3. Dispositif selon la revendication 2, **caractérisé en ce que** l'extrémité libre de la partie d'extrémité intérieure (31) possède une pluralité d'encoches (35) terminées par au moins une saillie (37) agencée pour loger le fond (3) du récipient (2) et de mouler ledit fond en correspondance avec l'état de fermeture (B).

4. Dispositif selon la revendication 3, **caractérisé en ce que** la saillie (37) est coplanaire avec les encoches correspondantes (35) ou s'étend en formant une dent (37a) à partir de celles-ci en direction des pinces extérieures (22).

5. Dispositif selon la revendication 2, **caractérisé en ce que** les extrémités libres des parties d'extrémité intérieures (31) des pinces intérieures (21) possèdent des parois (36) opposées l'une à l'autre et formant une fente (39), en correspondance avec l'état de fermeture (B).

6. Dispositif selon la revendication 1, **caractérisé en ce qu'**une partie d'extrémité extérieure (33) est fixée de manière amovible à l'extrémité libre de chaque mâchoire des pinces extérieures (22) par des moyens de liaison élastique (32).

7. Dispositif selon la revendication 6, **caractérisé en ce que** la partie d'extrémité extérieure (33) est formée pour mouler la partie de fond (4) de chaque récipient (2) avec une forme d'ailette presque plate et une nervure d'extrémité formée (7), avec une section presque triangulaire ou rectangulaire en extension transversale ou avec une section allongée presque circulaire ou rectangulaire.

8. Dispositif selon la revendication 1, **caractérisé en ce que** les deux arbres intérieurs (24) des pinces intérieures (21) sont reliés par engrenages au moyen de premiers moyens à dents (91).

9. Dispositif selon la revendication 8, **caractérisé en ce qu'**il comprend en outre des premiers moyens de déplacement (29) comprenant au moins un levier intérieur (93) fixé à au moins un arbre intérieur (24) de chaque pince intérieure (21) et qui supporte de manière rotative des premiers moyens de suiveurs de came (95) agencés pour suivre une came intérieure (97) du carrousel de fonctionnement (10).

10. Dispositif selon la revendication 1, **caractérisé en ce que** les deux arbres extérieurs (25) des pinces extérieures (22) sont reliés par engrenages au moyen deuxièmes moyens à dents (92).

11. Dispositif selon la revendication 10, **caractérisé en ce qu'**il comprend des deuxièmes moyens de déplacement (30) comprenant au moins un levier extérieur (94) fixé à au moins un arbre extérieur (25) des pinces extérieures (22) et qui supporte de manière rotative des deuxièmes moyens suiveurs de came (96) agencés pour suivre une came extérieure (98) du carrousel de fonctionnement (10).

12. Dispositif selon la revendication 1, **caractérisé en ce qu'**il comprend en outre un moyen de centrage (28), qui est relié de manière amovible à une mâchoire des pinces intérieures (21) et agencé pour positionner correctement chaque récipient (2) à l'intérieur du siège d'enveloppe (26).

13. Dispositif selon la revendication 1, **caractérisé en ce qu'**il comprend en outre un moyen de support (27) qui relie les extrémités libres du couple d'arbres intérieurs (24) et supporte de manière amovible le siège d'enveloppe (26).

14. Dispositif selon la revendication 1, **caractérisé en ce qu'**il comprend un moyen d'écrasement (80) muni d'un poinçon extérieur (81) qui peut être disposé entre les pinces extérieures (22) fermées en correspondance avec leur état de moulage (F), permettant de comprimer en correspondance avec un état d'écrasement (G) la partie de fond fondue(4) de chaque récipient (2, afin de mouler une nervure formée (7).

15. Dispositif selon la revendication 1, **caractérisé en ce qu'**il comprend un moyen d'écrasement (80) muni au moins d'un poinçon à pinces (82) qui est fixé à au moins une mâchoire des pinces extérieures (22) et qui est mis en mouvement par un moyen de percussion (83) en correspondance avec un état d'écrasement (G), dans lequel ledit poinçon à pinces (82) est disposé entre les mâchoires des pinces extérieures (22) qui sont fermées afin de comprimer la partie de fond fondue (4) de chaque récipient (2).
